# EUROPEAN PATENT SPECIFICATION

(11) **EP 3 947 061 B1**
(45) Date of publication and mention of the grant of the patent: **17.04.2024**
(21) Application number: 20715208.3
(22) Date of filing: 18.03.2020
(51) Int. Cl.: B60S 5/06, B60L 53/80, B66F 7/00

(54) **COLUMNS LIFT FOR VEHICLES**
SÄULENNHEBER FÜR FAHRZEUGE
PONT ÉLÉVATEUR À COLONNES POUR VÉHICULES

(30) Priority: 04.04.2019 IT 201900005092
(43) Date of publication of application: 09.02.2022
(73) Proprietor: Texa SpA, 31050 Monastier di Treviso (TV) (IT)
(72) Inventor: VIANELLO, Bruno, 31050 MONASTIER DI TREVISO (TV) (IT)
(74) Representative: Burchielli, Riccardo
(86) International application number: PCT/IT2020/050063
(87) International publication number: WO 2020/202226

(56) References cited:
- DE-A1-102016 114 599
- US-A1- 2012 251 281
- US-A1- 2014 360 011
- US-A1- 2016 107 619
- US-B2- 9 688 252

## Description

The present invention relates to a columns lift for vehicles.

More specifically, the invention relates to a columns lift similar to those normally used for raising vehicles and provided with a modular platform installed on and integrated in the structure thereof.

Such platform has the feature of operating independently from the main raising mechanism supporting the vehicle itself.

Currently, conventionally used columns lifts, for example used in garages for raising automobiles, trucks and motorcycles, provide a support structure or frame that may have a column or pantograph mechanism with movable supporting elements that raise the vehicle in order to perform maintenance or inspection operations.

The supports may consist of two or more arms connected to at least one column arranged in lateral position with respect to the vehicle, and sliding there along, or of a platform or slide connected to the pantograph mechanism on which the vehicle is positioned and then raised by means of actuators.

Such solutions are inconvenient and not easy in the case operations are to be carried out on parts of the vehicles whose access is not direct due to additional elements or components interposed between the operator and the work area.

Such problem takes on particular significance for example, in the case of vehicles that are entirely or partly electrically fed.

The current technology in the field of electric motor vehicles provides the use of a series of modules connected to one another, which form the battery packs.

The aforesaid battery packs are normally and mainly installed in a lower area of the vehicle, corresponding to a floor, which serves as support for the storage cells required for the operation thereof and are to be removed each time there is the need to carry out operations on inaccessible components of the vehicle or also on the batteries themselves.

Moreover, in the case of vehicles that are entirely electrically fed, due to the well-known intrinsic limitations of this type of technology, there are always several of such batteries, thus occupying almost the totality of the lower surface of the vehicle.

Finally, the same battery packs are relatively heavy and make the removal operations thereof from the vehicle frame slow and difficult.

Most times, the operator is forced to use a movable pantograph platform, which is positioned below the raised vehicle, where the battery packs are positioned after the removal thereof.

Such battery packs are then possibly moved onto an accessory work top or simply put aside until the end of the operations to be carried out on the vehicle or directly on the storage cells, prior to being repositioned on the floor of the vehicle.

Such movements, which are also useful for diagnostics operations on the state of efficiency of the storage cells, have further safety problems associated with voltages involved, the difficulties in assembling and disassembling electric and hydraulic components, the difficulties in handling and transporting voluminous and heavy components and the limited work space.

The need in any case is apparent to make available an alternative solution to the use of such movable platforms for removing and handling battery packs of electric vehicles that simplifies the disassembly, assembly and/or repair thereof, thus making it possible to obviate the drawbacks caused by the excessive overall dimensions and weight.

The relevant prior art also comprises the patent document US 9 688 252 B2 describing a method of exchanging an electrical energy storage system in an electric vehicle. This document also describes a columns lift for vehicles according to the preamble of the appended claim 1.

It is the aim of the present invention to obviate the above-mentioned drawbacks and in particular, to make a columns lift for vehicles which allows handling and repairing the battery packs of electric vehicles in a simple and quick manner and in safety for the operator.

It is another aim of the present invention to make a columns lift for vehicles which allows carrying out the assembly and disassembly of the battery packs of electric vehicles in a simple and quick manner, while limiting the handling of voluminous and heavy components.

It is a further aim of the present invention to make a columns lift for vehicles which allows keeping a convenient work space below the vehicles during the disassembly and installation of the battery packs of electric vehicles.

These and other aims are achieved by a columns lift for vehicles according to accompanying claim 1; further technical features are indicated in the subsequent claims.

The present invention advantageously makes it possible to simplify the disassembly, assembly and repair in general of the storage cells in the battery packs of the electric vehicles (usually contained below the vehicle floor).

Other aims and advantages of the columns lift for vehicles which is the object of the present invention will more fully emerge from the description that follows, relative to a preferred embodiment thereof given by way of non-limiting example, and from the appended drawings, in which:
- figure 1 is a perspective view of the columns lift for vehicles according to the invention, with a modular platform installed;
- figure 2 is a perspective view of the columns lift for vehicles according to the invention, during the raising of a vehicle;
- figure 3 is a perspective view of the columns lift for vehicles according to the invention, in removal step of the battery packs;
- figures 4 and 5 show subsequent processing steps of the battery packs removed from the vehicle through the columns lift in the preceding drawings, according to the invention.

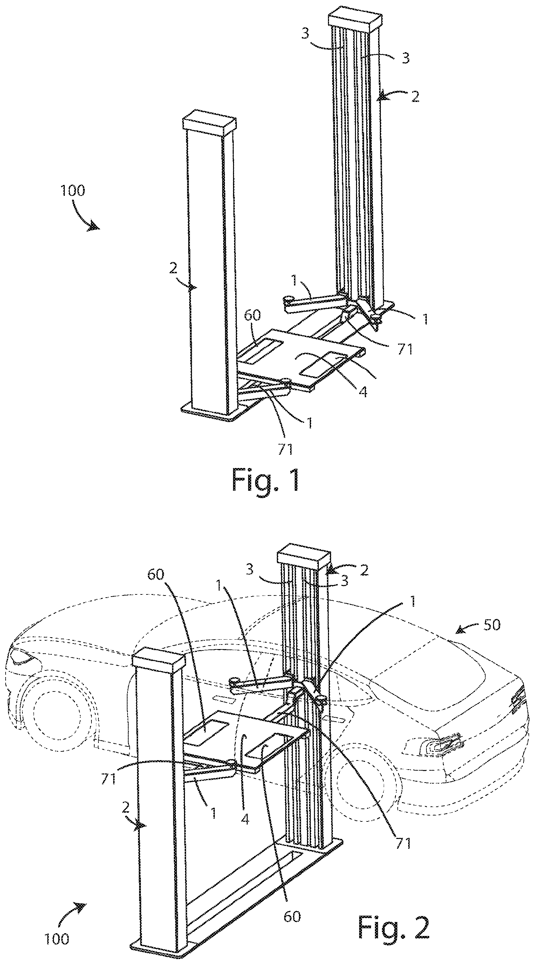

With particular reference to figures 1 and 2, a columns lift 100 is depicted, provided with at least one column 2 and a support arm 1, and preferably of the two-column type 2, and advantageously having four support arms 1, on which a vehicle 50 is positioned, an electric vehicle in particular.

Such arms 1, which usually are actuated electrically or hydraulically, move along the column 2 and in particular, in respective grooves 3 obtained along the longitudinal direction of the columns 2, in order to raise the vehicle 50 to an adequate height.

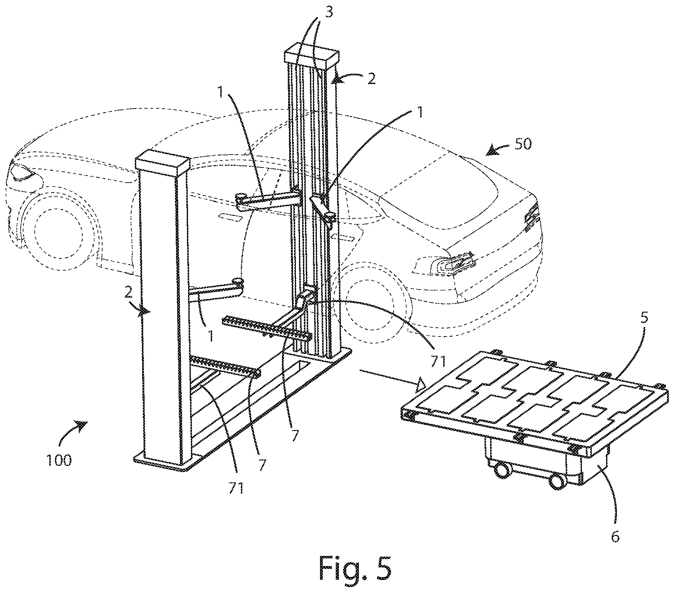

The columns lift 100 according to the invention advantageously integrates a platform 4, preferably a modular platform, it also sliding along column 2; the platform 4 in particular slides along the grooves 3 of the columns 2 and is supported by respective supports 7 (shown in detail in accompanying figure 5) connected to related arms 71 sliding on the columns 2.

The platform 4 is designed to receive the storage cell battery 5 after the removal thereof from the lower area of the electric vehicle 50 once the aforesaid vehicle is placed on the arms 1.

Moreover, with the platform 4 raised, it is possible to work directly below the vehicle 50 to disassemble and/or disconnect the electric component and/or the hydraulic component of the vehicle in order to disassemble and/or disconnect the fastenings of the battery 5 in a free space.

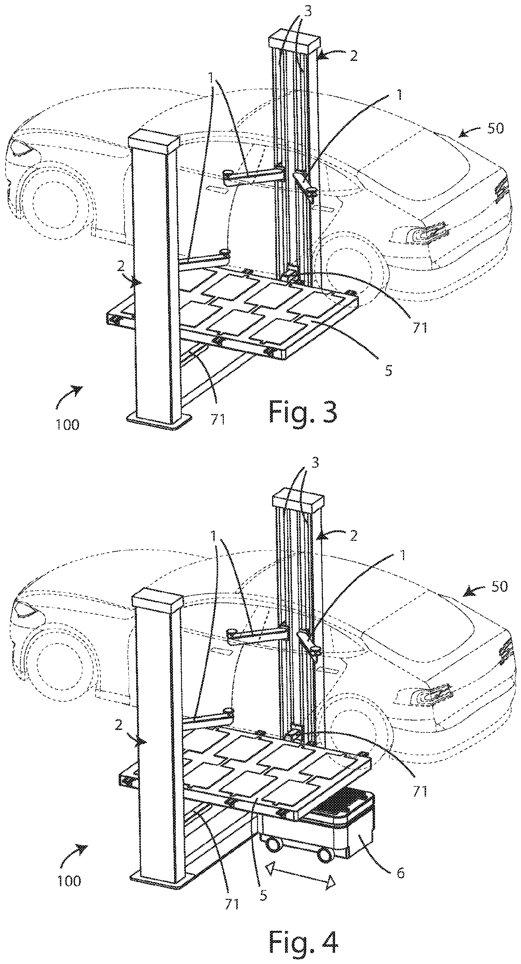

Such platform 4 advantageously is capable of being raised and lowered independently of the support arms 1, thus allowing one or more batteries 5 to be easily moved into a first lowered position (as shown in accompanying figure 3).

The aforesaid lowered position of the platform 4 may be used as first work station if there is the need to carry out maintenance operations on the individual storage cells of the battery 5 and/or on the related connections. The platform 4 advantageously further comprises shaped openings 60 which are used for introducing or removing modular inserts onto/from the platform 4 itself, which inserts make it possible to modify the geometry thereof by adapting the surface thereof to the various types of existing batteries.

Additionally as shown in the accompanying figures 4 and 5, the possibility is provided, according to the invention, of using a multi-function modular wheeled or fixed station 6 on which to rest the platform 4 so as to handle the battery 5 in a secondary work station without the need to arrange a dedicated work area.

Such embodiment makes it possible to gain further manoeuvring space under the vehicle 50 in case of repairs thereon, or to carry out more complex operations or operations which cannot be carried out in the primary work area on the storage cells of the battery 5.

Such modular station 6 also integrates diagnostic and/or repair instruments for the storage cells of the battery 5.

The station 6 advantageously consists of a multi-directional translation system moved by two wheels and/or balls for positioning the battery 5 in the different working areas which are useful for the maintenance and/or repair operations to be carried out.

At the end of the operations for repairing and/or replacing the storage cells, it is possible to proceed, through station 6, with possibly repositioning the platform 4 on the related supports 7 and centring the battery 5 below the floor of the vehicle 50; for this purpose, the station 6 may be provided with a system for raising the battery 5 to be fastened below the vehicle 50.

The centring of the battery 5 below the vehicle 50 advantageously is simplified by the fact that the position of the aforesaid battery 5 is uniquely determined by the position of the platform 4 on the supports 7.

The features of the columns lift for vehicles the object of the invention clearly emerge from the preceding description, as do the advantages thereof.

It is also apparent that the present invention is described by way of example only, without limiting the scope of application, according to its preferred embodiments, but it shall be understood that the invention may be modified and/or adapted by experts in the field without thereby departing from the scope of protection of the inventive concept of the accompanying claims herein.

## Claims

1. Columns lift (100) for vehicles (50) comprising at least one column (2) and at least one first arm (1) for supporting a vehicle (50), said at least one first arm (1) being configured to slide along said at least one column (2) in order to raise said vehicle (50) to a given height above the ground, wherein at least one platform (4) is positioned on supports (7) connected to at least one second arm (71) which slides on said at least one column (2), wherein at least one battery (5) of said vehicle (50) can be placed on said at least one platform (4), **characterized in that** said at least one platform (4), when it is in a lowered position, is positioned on a multi-function modular wheeled or fixed station (6) and **in that** said multi-function modular station (6) has diagnostic and/or repair instruments used for said at least one battery (5).

2. Columns lift (100) according to claim 1, **characterized in that** said at least one second arm (71) is movable independently with respect to said at least one first arm (1).

3. Columns lift (100) according to at least one of the previous claims, **characterized in that** said at least one platform (4) comprises openings (60) shaped so as to put into or remove modular inserts.

4. Columns lift (100) according to at least one of the previous claims, **characterized in that** said multi-function modular station (6) is moved by wheels and/or balls in order to place said at least one battery (5) in different working areas.

5. Columns lift (100) according to at least one of the previous claims, **characterized in that** said at least one battery (5) is housed in said vehicle (50) starting from a position which is uniquely determined by the position of said at least one platform (4) placed on said supports (7).

## Patentansprüche

1. Säulenheber (100) für Fahrzeuge (50) umfassend mindestens eine Säule (2) und mindestens einen ersten Arm (1) zum Tragen eines Fahrzeugs (50), wobei der mindestens eine erste Arm (1) verschiebbar ausgebildet ist entlang der mindestens einen Säule (2), um das Fahrzeug (50) auf eine bestimmte Höhe über dem Boden anzuheben, wobei mindestens eine Plattform (4) auf Stützen (7) positioniert ist, die mit mindestens einem zweiten Arm (71) verbunden sind, das auf der mindestens einen Säule (2) gleitet, wobei mindestens eine Batterie (5) des Fahrzeugs (50) auf der mindestens einen Plattform (4) platziert werden kann, **dadurch gekennzeichnet, dass** die mindestens eine Plattform (4), wenn es sich in einer abgesenkten Position befindet, auf einer modularen Multifunktionsstation mit Rädern oder einer festen Station (6) positioniert ist und dass die modulare Multifunktionsstation (6) über Diagnose und/oder Reparaturinstrumente verfügt, die für mindestens eine dieser Stationen verwendet werden Batterie (5).

2. Säulenheber (100) nach Anspruch 1, **dadurch gekennzeichnet, dass** der mindestens einen zweiten Arm (71) unabhängig in Bezug auf den mindestens einen ersten Arm (1) beweglich ist.

3. Säulenheber (100) nach mindestens einem der vorhergehenden Ansprüche, **dadurch gekennzeichnet, dass** die mindestens eine Plattform (4) Öffnungen (60) aufweist, die so geformt sind, dass modulare Einsätze eingesetzt oder entfernt werden können.

4. Säulenheber (100) nach mindestens einem der vorherigen Ansprüche, **dadurch gekennzeichnet, dass** die modulare Multifunktionsstation (6) durch Räder und/oder Kugeln bewegt wird, um die mindestens eine Batterie (5) darin zu platzieren verschiedene Arbeitsbereiche.

5. Säulenheber (100) nach mindestens einem der vorherigen Ansprüche, **dadurch gekennzeichnet, dass** die mindestens eine Batterie (5) in dem Fahrzeug (50) ausgehend von einer Position untergebracht ist, die eindeutig durch die Position bestimmt ist mindestens eine Plattform (4), die auf den Stützen (7) platziert ist.

## Revendications

1. Pont élévateur à colonnes (100) pour véhicules (50) comprenant au moins une colonne (2) et au moins un premier bras (1) pour supporter un véhicule (50), ledit au moins un premier bras (1) étant configuré pour glisser le long de ladite au moins une colonne (2) afin d'élever ledit véhicule (50) à une hauteur donnée au-dessus du sol, dans lequel au moins une plate-forme (4) est positionnée sur des supports (7) reliés à au moins un deuxième bras (71) qui glisse sur ladite au moins une colonne (2), dans laquelle au moins une batterie (5) dudit véhicule (50) peut être placée sur ladite au moins une plate-forme (4), **caractérisée en ce que** ladite au moins une plate-forme (4), lorsqu'elle est en position abaissée, est positionnée sur une station modulaire multifonctionnelle sur roues ou fixe (6) et **en ce que** ladite station modulaire multifonctionnelle (6) dispose d'instruments de diagnostic et/ou de réparation utilisés pour ladite au moins une batterie (5).

2. Élévateur à colonnes (100) selon la revendication 1, **caractérisée en ce que** ledit au moins un second bras (71) est mobile indépendamment par rapport audit au moins un premier bras (1).

3. Pont élévateur à colonnes (100) selon au moins l'une des revendications précédentes, **caractérisé en ce que** ladite au moins une plate-forme (4) comporte des ouvertures (60) conformées de manière à pouvoir introduire ou retirer des inserts modulaires.

4. Pont élévateur à colonnes (100) selon au moins l'une des revendications précédentes, **caractérisé en ce que** ladite station modulaire multifonction (6) est déplacée par des roues et/ou des billes afin de placer ladite au moins une batterie (5) dans différentes zones de travail.

5. Pont élévateur à colonnes (100) selon au moins l'une des revendications précédentes, **caractérisé en ce que** ladite au moins une batterie (5) est logée dans ledit véhicule (50) à partir d'une position qui est déterminée de manière unique par la position de ladite au moins une plate-forme (4) placée sur lesdits supports (7).
